# EUROPÄISCHE PATENTSCHRIFT

(11) **EP 3 501 630 B1**
(45) Veröffentlichungstag und Bekanntmachung des Hinweises auf die Patenterteilung: **27.01.2021**
(21) Anmeldenummer: 17210262.6
(22) Anmeldetag: 22.12.2017
(51) Int. Cl.: A23F 5/24, B01F 3/04, B67D 1/12

(54) **VORRICHTUNG ZUM AUSTRAGEN VON, VORZUGSWEISE GEKÜHLTEN, FLUIDEN**
DEVICE FOR APPLYING FLUIDS, PREFERABLY COOLED FLUIDS
DISPOSITIF D'ÉVACUATION DE FLUIDES, DE PRÉFÉRENCE REFROIDIS

(43) Veröffentlichungstag der Anmeldung: 26.06.2019
(73) Patentinhaber: iSi GmbH, 1217 Wien (AT)
(72) Erfinder: Pochtler, Christian C., 1190 Wien (AT)
(74) Vertreter: KLIMENT & HENHAPEL

(56) Entgegenhaltungen:
- EP-A1- 1 688 813
- EP-A2- 2 279 786
- WO-A1-00/67628
- US-A- 5 443 186
- US-A1- 2015 336 785

## Beschreibung

### GEBIET DER ERFINDUNG

Die vorliegende Erfindung betrifft eine Vorrichtung zum Austragen von, vorzugsweise gekühlten, Fluiden gemäß dem Oberbegriff des Anspruchs 1.

### STAND DER TECHNIK

Es sind Standgeräte für den Gastronomiebereich zur Herstellung eines sogenannten "Nitro Coffee" in Form von sogenannten "KEG-Systemen" bekannt, wobei es sich um gekühlten Kaffee handelt, der vom Prinzip her wie ein "Irish Stout" oder "Irish Extra Stout", üblicherweise wird das Produkt als "Guinness" bezeichnet, aufbereitet wird. D.h. es wird der gekühlte bzw. kalte Kaffee mit Stickstoff (N2) unter Druck beaufschlagt und im Anschluss in ein Behältnis, beispielsweise ein Glas, eingeschenkt, wobei sich durch die Beaufschlagung des kalten Kaffees mit Stickstoff (N2) während des Einschenkens ein sogenannter "Kaskadeneffekt" ergibt. Hierbei sinken im Randbereich des Behältnisses beim Einschenken wasserfall- bzw. wellenartige Schaumstrukturen ab, die sich an der Oberfläche des Behältnisses zu einer cremigen Krone bzw. Haube verfestigen, wobei zur Herstellung der kaskadenartigen Schaumentwicklung eine Diffusorplatte eingesetzt wird.

Bei diesen Geräten wird die Gasversorgung über Kapseln aus Metall sichergestellt, die in die jeweilige Vorrichtung eingesetzt und in einem dafür vorgesehenen Bereich, der üblicherweise als Metallmembran ausgebildet ist, aufgestochen werden müssen. Nachteilig bei diesen Systemen ist, dass beim Aufstechen unvermeidbar Späne des Materials der Kapsel bzw. der zu durchstechenden Membran, insbesondere Metallspäne, erzeugt werden können. Hierbei besteht die Gefahr, dass besagte Späne in ein nachgeschaltetes Element gelangen und dieses außer Funktion setzen. Diese Gefahr ist klarerweise umso größer, je öfter die Vorrichtung verwendet wird bzw. je mehr Gaskapseln aufgestochen werden, da hierdurch immer mehr Späne erzeugt werden.

Zudem liegen die Nachteile von Standgeräten auf der Hand, nämlich die örtlich beschränkte Einsatzmöglichkeit und der meist große Platzbedarf. Insbesondere für den Heimbereich sind solche Standgeräte daher sehr unattraktiv.

Aus der US 2015/336785 A1 ist ein tragbarer Getränkespender bekannt, der ein Gefäß sowie eine regelbare Verschlussanordnung mit einer Gaskapsel und einer Aufstecheinheit zum Aufstechen der Gaskapsel umfasst. Weiters weist die Verschlussanordnung einen Schmutzfilter aus gesintertem Metall sowie einen davor angeordneten Sammelbereich auf.

Analog ist aus der US 5443186 A ein tragbarer Softdrink-Spender bekannt, der u.a. eine Kartuschenhalterung für eine Kohlendioxid-Kartusche sowie eine Aufstecheinheit zum Durchstechen der Dichtung der Kartusche umfasst. Benachbart zur Aufstecheinheit weist der Spender einen Filter aus gesintertem Metall und davor einen Spänesammelraum auf.

### AUFGABE DER ERFINDUNG

Es ist daher Aufgabe der vorliegenden Erfindung eine mit Gaskapseln zu betreibende Vorrichtung zum Austragen von Austragsmedien, insbesondere von gekühlten Fluiden, zu schaffen, die die oben genannten Nachteile vermeidet. Insbesondere soll sichergestellt werden, dass keine Späne, insbesondere Metallspäne, ins jeweilige Austragsmedium und/oder in ein der Gaskapsel nachgeschaltetes Element der Vorrichtung gelangen, welches Element durch die Metallspäne zerstört werden könnte.

### DARSTELLUNG DER ERFINDUNG

Zur Lösung der genannten Aufgabe ist erfindungsgemäß eine Vorrichtung gemäß Anspruch 1 vorgesehen. Die Vorrichtung umfasst zum Austragen von, vorzugsweise gekühlten, Fluiden: ein zu öffnendes und zu verschließendes Behältnis, welches einen Geräteinnenraum zur Aufnahme eines Austragsmediums ausbildet; einen Gaskapselhalter zur Aufnahme einer auswechselbaren, mit Gas gefüllten Gaskapsel; eine Aufstecheinheit, um eine fluidische Verbindung zwischen der Gaskapsel und der Vorrichtung zu gewährleisten; eine Austragungsöffnung, durch welche das Austragsmedium bei Betätigung der Vorrichtung aus dem Geräteinnenraum austragbar ist. Weiters ist vorgesehen, dass in einer Gasströmungsrichtung gesehen nach der Aufstecheinheit ein Druckbegrenzungsventil angeordnet ist und dass in der Gasströmungsrichtung gesehen vor dem Druckbegrenzungsventil ein Spänesammelraum angeordnet ist.

Beim Austragsmedium kann es sich z.B. um gekühlten Kaffee handeln, es ist die Verwendung der Vorrichtung mit warmen oder gar heißen Austragsmedien grundsätzlich aber ebenso denkbar. Das Austragsmedium bzw. der gekühlte Kaffe kann bei geöffnetem Behältnis in den Geräteinnenraum eingebracht werden und bei verschlossenem Behältnis mittels des Gases der Gaskapsel durch die Austragsöffnung aus dem Geräteinnenraum bzw. aus der Vorrichtung ausgetragen werden kann. Das Gas kann insbesondere Stickstoff (N2) sein, es sind aber grundsätzlich andere Gase, wie z.B. Argon, ebenfalls denkbar. Dabei kann die Vorrichtung mittels eines Betätigungselements vom Benutzer betätigt werden, um das Austragen zu kontrollieren bzw. in Gang zu setzen und zu stoppen.

Indem eine Gaskapsel für die Bereitstellung von Gas unter hohem Druck vorgesehen ist, kann die Vorrichtung entsprechend portabel und handlich ausgelegt werden. Die fluidische Verbindung zwischen der Vorrichtung und der Gaskapsel kann durch die Aufstecheinheit gewährleistet werden, wenn die Gaskapsel im Gaskapselhalter aufgenommen und gehalten ist. Dies beinhaltet die Herstellung besagter fluidischer Verbindung durch Aufstechen der Gaskapsel in einem dafür vorgesehenen Bereich der Gaskapsel, der insbesondere als Membran ausgeführt sein kann.

Die Gaskapsel ist üblicherweise aus Metall gefertigt. Entsprechend ist die Membran vorzugsweise als Metallmembran ausgeführt.

Das Druckbegrenzungsventil dient dazu, den Druck im Geräteinnenraum zu begrenzen, d.h. der Begriff Druckbegrenzungsventil ist funktional zu verstehen. Die Begrenzung des Drucks im Geräteinnenraum dient einerseits der Sicherheit, sodass der Druck im Geräteinnenraum nicht zu einer Beschädigung oder gar zu einem Bersten des Behältnisses bzw. der Vorrichtung führen kann. Andererseits ist für die Zubereitung bestimmter Speisen und/oder Getränke, insbesondere von "Nitro Coffee", ein bestimmter Druck bzw. ein Druck, der in einem bestimmten Bereich liegt, im Geräteinnenraum nötig. Jedenfalls liegt der mittels des Druckbegrenzungsventils begrenzte Druck im Geräteinnenraum deutlich, typischerweise 1 bis 2 Größenordnungen, unter jenem Druck des Gases in der (mit dem Gas gefüllten) geschlossenen (also vor dem Aufstechen) Gaskapsel. Bzw. wird der Druck im Geräteinnenraum im Verhältnis zum Druck in der Gaskapsel typischerweise um einen Faktor 6 bis 10, vorzugsweise 7,5 bis 8,5, reduziert, wenn die Gaskapsel in fluidischer Verbindung mit der Vorrichtung steht (also nach dem Aufstechen, sodass dem Gas ein größeres Volumen als nur das Innere der Gaskapsel zur Verfügung steht).

Beim Durchstechen bzw. Aufstechen der Gaskapsel bzw. der Membran kann es zur Erzeugung von Spänen des durchstochenen Materials kommen, typischerweise also zur Erzeugung von Metallspänen. Darüberhinaus können natürlich auch anderweitige Verunreinigungen auf der Gaskapsel, insbesondere auf der Membran, angeordnet sein, die beim Aufstechen in die Aufstecheinheit gelangen und durch das Gas weitertransportiert werden können. Durch das Gas können diese Späne bzw. Verunreinigungen in Gasströmungsrichtung transportiert werden. Um zu verhindern, dass die Späne/Verunreinigungen in das Druckbegrenzungsventil oder gar in den Geräteinnenraum gelangen, der in Gasströmungsrichtung gesehen hinter dem Druckbegrenzungsventil angeordnet ist, ist der Spänesammelraum vor dem Druckbegrenzungsventil vorgesehen, in welchem die erzeugten Späne bzw. ggf. die genannten Verunreinigungen sich sammeln. Zwar wäre es theoretisch z.B. möglich, vor dem Druckbegrenzungsventil lediglich mindestens einen offenen verengten Querschnitt, durch den das Gas entlang eines Strömungspfads strömen muss, so klein zu gestalten, dass zwar das Gas nicht jedoch die Späne durch den Querschnitt treten können. Allerdings würde in der Praxis ein solcher Querschnitt durch geringste Menge an Spänen/Verunreinigungen sofort blockiert, sodass das Gas nicht mehr ungehindert bis in den Geräteinnenraum gelangen würde, was einen Druckaufbau im Geräteinnraum entweder komplett verhindern oder impraktikabel verlangsamen würde. Im Spänesammelraum hingegen kann sich eine große Menge an Spänen/Verunreinigungen ansammeln, ohne dass es zu einer Blockade des in das Druckbegrenzungsventil bzw. bis in den Geräteinnenraum strömenden Gases kommt. Der Spänesammelraum gewährleistet also einerseits, dass keine Späne/Verunreinigungen ins Druckbegrenzungsventil oder gar in den Geräteinnenraum gelangen, und andererseits, dass das Gas problemlos bis in den Geräteinnenraum strömen kann, um dort den gewünschten Druck für das Austragen des Austragsmediums aufzubauen.

Um den Spänesammelraum platzsparend in der Vorrichtung unterzubringen, ist es bei einer bevorzugten Ausführungsform der erfindungsgemäßen Vorrichtung vorgesehen, dass der Spänesammelraum zumindest abschnittsweise durch die Aufstecheinheit begrenzt ist.

Um den Spänesammelraum besonders präzise und einfach herstellen zu können, ist es bei einer bevorzugten Ausführungsform der erfindungsgemäßen Vorrichtung vorgesehen, dass der Spänesammelraum rotationssymmetrisch ausgebildet ist. Der Spänesammelraum kann entsprechend z.B. durch Drehen und/oder Bohren und/oder Erodieren hergestellt werden.

Vorzugsweise ist eine der Rotationssymmetrie entsprechende Rotationsachse so angeordnet, dass die Rotationsachse mit einer Längsachse der Aufstecheinheit zusammenfällt.

Bei einer bevorzugten Ausführungsform der erfindungsgemäßen Vorrichtung ist vorgesehen, dass der Spänesammelraum ein Volumen von mindestens 20 mm³, vorzugsweise von 30 mm³ bis 90 mm³, aufweist. Hierdurch ist sichergestellt, dass bei einer üblichen Spanbildungswahrscheinlichkeit pro Aufstechvorgang und bei typischerweise auftretenden Spangrößen von 100 µm bis 750 µm selbst nach einigen tausend Aufstechvorgängen der Spänesammelraum noch nicht vollständig gefüllt ist und das Gas ungehindert bis in den Geräteinnenraum strömen kann. Mit anderen Worten garantiert das genannte Volumen, dass es während einer typischen Lebensdauer der Vorrichtung nicht zu einer Verstopfung, die das Strömen des Gases in den Geräteinnenraum ungebührlich be- oder gar verhindert, durch die beim Aufstechen erzeugten Späne kommt.

Um zu verhindern, dass Späne, insbesondere durch Transport mittels des aus der Gaskapsel in den Geräteinnenraum strömenden Gases, aus dem Spänesammelraum in das Druckbegrenzungsventil oder gar in den Geräteinnenraum gelangen können, kann z.B. mindestens ein offener verengter Querschnitt vorgesehen sein, wie oben bereits erwähnt. Dabei ist der mindestens eine offene verengte Querschnitt so angeordnet, dass das Gas auf dem Weg vom Spänesammelraum ins Druckbegrenzungsventil bzw. in den Geräteinnenraum diesen passieren muss, und so dimensioniert, dass zwar das Gas nicht jedoch die Späne durch diesen treten können.

Die Herstellung eines solchen mindestens einen offenen verengten Querschnitts ist technisch aufwendig. Um das Funktionsprinzip des offenen verengten Querschnitts technisch einfacher und kostengünstiger umzusetzen, ist vorgesehen, dass in der Gasströmungsrichtung gesehen nach dem Spänesammelraum und vor dem Druckbegrenzungsventil ein Filterelement angeordnet ist, wobei das Filterelement vorzugsweise den Spänesammelraum zumindest abschnittsweise begrenzt. Das Filterelement ist dabei so ausgelegt, dass zwar das Gas nicht jedoch die Späne durch das Filterelement treten können. Dabei weist das Filterelement vorzugsweise Poren auf, deren Größe derart dimensioniert ist, dass zwar das Gas nicht jedoch die Späne durch die Poren und damit durch das Filterelement treten können.

Vorzugsweise ist das Filterelement in Gasströmungsrichtung gesehen relativ dünn bzw. flach, insbesondere scheibenförmig, ausgelegt, da hierdurch das durch das Filterelement hindurch tretende Volumen des Gases pro Zeiteinheit, also der Gasvolumenstrom, hoch gehalten werden kann. Besonders hohe Gasvolumenströme bei gleichzeitig hinreichender, zuverlässiger Filterleistung werden bei einer besonders bevorzugten Ausführungsformen der erfindungsgemäßen Vorrichtung erzielt, indem ein Verhältnis von Dicke zu Durchmesser des Filterelements im Bereich von 1/3 bis 1/7, vorzugsweise von 1/4 bis 1/6 vorgesehen ist.

Typischerweise beträgt die Dicke des Filterelements, welche vorzugsweise in Gasströmungsrichtung gemessen wird, von 0,5 mm bis 3,5 mm, um hohe Gasvolumenströme bei gleichzeitig hinreichender, zuverlässiger Filterleistung zu gewährleisten. Wie bereits festgehalten beträgt die typischerweise auftretende Spangröße von 100 µm bis 750 µm. Die genannten Verunreinigungen auf der Gaskapsel weisen typischerweise eine Größe von mindestens 75 µm auf. Um sicherzustellen, dass zwar das Gas nicht jedoch die Späne bzw. die Verunreinigungen durch die Poren und damit durch das Filterelement treten können, ist erfindungsgemäß vorgesehen, dass das Filterelement eine mittlere Porengröße von 25 µm bis 35 µm aufweist. Ein Durchtreten der Späne bzw. Verunreinigungen durch die Poren bzw. durch das Filterelement kann somit ausgeschlossen werden. Bei der erfindungsgemäßen Vorrichtung ist weiters vorgesehen, dass das Filterelement aus Polypropylen (PP) gefertigt ist. Grundsätzlich, aber nicht im Sinne der Erfindung, kann das Filterelement aus Polypropylen (PP) und/oder Polyethylen (PE) und/oder einem gesinterten Fluorpolymer gefertigt sein. D.h. es ist nicht ausgeschlossen, dass das Filterelement aus einer Kombination der angegebenen Materialien besteht oder diese umfasst. Ein Beispiel für ein gesintertes Fluorpolymer ist gesintertes Polytetrafluorethylen (PTFE). Mit jedem der angegebenen Materialien lassen sich organoleptische und mechanische sowie thermische Anforderungen erfüllen. Hierbei weist Polypropylen (PP) den Vorteil auf, dass es vergleichsweise hohen thermischen Belastungen, insbesondere bis ca. 95°C (kommt z.B. bei Gewerbegeschirrspülern regelmäßig vor), problemlos standhält, wodurch die Vorrichtung beispielsweise auch in einer Geschirrspülmaschine gereinigt werden kann. Polyethylen (PE) ist dann als besonders geeignetes Material für das Filterelement anzusehen, wenn lediglich geringere thermische Belastungen, insbesondere kleiner gleich 80°C, bei der Verwendung als auch der Reinigung der Vorrichtung auftreten bzw. vorgesehen sind.

Um eine möglichst zuverlässige Druckeinstellung- bzw. regelung durch das Druckbegrenzungsventil zu gewährleisten und gleichzeitig eine platzsparende Bauweise des Druckbegrenzungsventils zu ermöglichen, kann dieses nach dem Prinzip eines Differentialkolbens- bzw. eines Differentialzylinders ausgebildet sein. Entsprechend ist es bei einer bevorzugten Ausführungsform der erfindungsgemäßen Vorrichtung vorgesehen, dass das Druckbegrenzungsventil einen Druckbegrenzungsventilkolben mit einer außenliegenden Wirkfläche und mit einer innenliegenden Wirkfläche aufweist, wobei die außenliegende Wirkfläche mit einem ersten Gasdruck beaufschlagbar ist, der in der Gaskapsel vorherrscht, wenn die Gaskapsel in fluidischer Verbindung mit dem Druckbegrenzungsventil steht, und wobei die innenliegende Wirkfläche mit einem zweiten Gasdruck beaufschlagbar ist, der im Geräteinnenraum vorherrscht, wenn das Druckbegrenzungsventil mit dem Geräteinnenraum in fluidischer Verbindung steht, und dass das Druckbegrenzungsventil derart ausgelegt ist, dass das Druckbegrenzungsventil einen offenen Zustand aufweist, solange ein erstes Produkt aus dem ersten Gasdruck und der außenliegenden Wirkfläche größer gleich einem zweiten Produkt aus dem zweiten Gasdruck und der innenliegenden Wirkfläche ist, und einen geschlossenen Zustand, solange das erste Produkt kleiner gleich dem zweiten Produkt ist. Der erste Gasdruck wird also durch das Gas, das - aufgrund der fluidischen Verbindung der Gaskapsel mit der Vorrichtung, insbesondere mit der außenliegenden Wirkfläche - aus der Gaskapsel bis ins Druckbegrenzungsventil zur außenliegenden Wirkfläche strömen kann, hervorgerufen, wobei bei geschlossenem Druckbegrenzungsventil der erste Gasdruck im gesamten Bereich des Strömungspfads zwischen der außenliegenden Wirkfläche und der Gaskapsel bzw. dem inneren Volumen der Gaskapsel bzw. dem Gas der Gaskapsel vorherrscht. Der zweite Gasdruck herrscht - aufgrund der fluidischen Verbindung des Geräteinnenraums mit dem Druckbegrenzungsventil, insbesondere mit der innenliegenden Wirkfläche, wobei diese fluidische Verbindung beim Verschließen des Behältnisses automatisch hergestellt wird - bei geschlossenem Druckbegrenzungsventil entsprechend im Geräteinnenraum und im gesamten Bereich des Strömungspfads zwischen der innenliegenden Wirkfläche und dem Geräteinnenraum vor.

Das Druckbegrenzungsventil stellt somit im Geräteinnenraum den zweiten Gasdruck ein, der vorzugsweise im Bereich von 1,5 bar bis 21 bar, insbesondere im Bereich von 1,5 bis 5 bar, liegt.

Nicht zuletzt aufgrund unvermeidbarer Reibung ändert sich der Zustand des Druckbegrenzungsventils von offen zu geschlossen oder umgekehrt in der Regel nicht, wenn der erste Gasdruck und der zweite Gasdruck exakt gleich sind.

Bei einer besonders bevorzugten Ausführungsform der erfindungsgemäßen Vorrichtung, die herstellungstechnisch besonders günstig ist, ist vorgesehen, dass der Druckbegrenzungsventilkolben linear beweglich innerhalb eines Zentrierabschnitts des Druckbegrenzungsventils angeordnet ist, wobei der Druckbegrenzungsventilkolben im offenen Zustand des Druckbegrenzungsventils von einem durch den Zentrierabschnitt ausgebildeten Dichtkegel beabstandet angeordnet ist und wobei der Druckbegrenzungsventilkolben im geschlossenen Zustand des Druckbegrenzungsventils dicht am Dichtkegel anliegt. Dabei ist der Druckbegrenzungsventilkolben entlang einer, vorzugsweisen geraden, Linie bewegbar.

Um eine Verunreinigung des Druckbegrenzungsventilkolbens aus einer der Gasströmungsrichtung entgegengesetzten Richtung, bspw. durch das Austragsmedium, zu verhindern, ist es bei einer bevorzugten Ausführungsform der erfindungsgemäßen Vorrichtung vorgesehen, dass das Druckbegrenzungsventil ein Rückschlagventil umfasst.

Im Geräteinnenraum können relativ hohe Drücke entstehen bzw. kann der zweite Gasdruck relativ groß werden. Dies kann einerseits so vorgesehen sein, d.h. es können das Druckbegrenzungsventil und die Gaskapsel entsprechend abgestimmt sein, um z.B. bestimmte gewünschte Speise/Getränke zubereiten zu können. So verlangt z.B. die Zubereitung eines "Nitro Coffee" einen relativ hohen Druck im Geräteinnenraum, typischerweise 1,5 bar bis 5 bar, der durch den Stickstoff aus der Kapsel aufgebracht werden muss. Andererseits können relativ hohe Drücke auch unbeabsichtigt entstehen, wenn der Benutzer zuviel - beispielsweise über eine Begrenzungslinie im Geräteinnenraum hinaus - Austragsmedium in das Behältnis bzw. in den Geräteinnenraum füllt. Für das Gas, das zur Druckbeaufschlagung des Austragsmediums verwendet wird, steht dann weniger Raum zur Verfügung und es kommt entsprechend zu einem gegenüber dem Normalbetrieb erhöhten Druck im Geräteinnenraum.

Um auch bei solchen relativ hohen Drücken im Geräteinnenraum die mechanische Integrität der Vorrichtung bzw. des Behältnisses und damit die Sicherheit des Benutzers zu gewährleisten, ist es bei einer bevorzugten Ausführungsform der erfindungsgemäßen Vorrichtung vorgesehen, dass das Behältnis flaschenartig und aus Metall ausgebildet ist, dass das Behältnis eine Wandstärke von 0,5 mm bis 3 mm, vorzugsweise von 1 mm bis 1,5 mm, aufweist und dass das Behältnis einen den Geräteinnenraum abschnittsweise begrenzenden Boden aufweist, welcher Boden champagnerflaschenartig nach innen gewölbt ist. Dies stellt eine optimale Kombination einzelner, zur Sicherheit beitragender Merkmale dar, die neben einer optimalen Sicherheit auch eine besonders kostengünstige Herstellung ermöglicht.

Das Behältnis kann insbesondere aus Stahl gefertigt sein.

Aufgrund der champagnerflaschenartigen Wölbung ragt der Boden in den Geräteinnenraum hinein.

Gemäß dem oben Gesagten ist insbesondere zur Zubereitung von "Nitro Coffee" erfindungsgemäß ein System vorgesehen, umfassend eine erfindungsgemäße Vorrichtung sowie die mit Gas gefüllte Gaskapsel, wobei das Gas vorzugsweise Stickstoff (N2) ist. Die Angabe von Stickstoff als bevorzugtes Gas ist selbstverständlich so zu verstehen, dass mögliche unvermeidbare bzw. vernachlässigbare Verunreinigungen hierin mitumfasst sind.

Bei einer bevorzugten Ausführungsform des erfindungsgemäßen Systems ist vorgesehen, dass die Gaskapsel in einem verschlossenen Zustand 1,4 g bis 2,6 g Stickstoff (N2) enthält. Dies erweist sich insbesondere in Hinblick auf die Zubereitung von "Nitro Coffee" dahingehend als optimal, dass das gesamte Austragsmedium, wenn dieses mit der maximal zulässigen/vorgesehenen Menge in das Behältnis gefüllt worden ist, mit dem dafür vorgesehenen Druck ausgetragen werden kann.

Bei einer bevorzugten Ausführungsform des erfindungsgemäßen Systems ist vorgesehen, dass in einem verschlossenen Zustand der Gaskapsel der Stickstoff (N2) in der Gaskapsel einen Druck von 85 bar bis 155 bar aufweist. Auch dies erweist sich insbesondere in Hinblick auf die Zubereitung von "Nitro Coffee" dahingehend als optimal, dass das gesamte Austragsmedium, wenn dieses mit der maximal zulässigen/vorgesehenen Menge in das Behältnis gefüllt worden ist, mit dem dafür vorgesehenen Druck ausgetragen werden kann.

Bei einer bevorzugten Ausführungsform des erfindungsgemäßen Systems ist vorgesehen, dass in einem Arbeitszustand des Systems die Gaskapsel im Gaskapselhalter gehalten und eine fluidische Verbindung der Gaskapsel mit der Vorrichtung gewährleistet ist, indem die Gaskapsel mittels der Aufstecheinheit aufgestochen ist, wobei die Gaskapsel einen Gasspeicher ausbildet, der eine Verwendung der Vorrichtung zum Austragen ermöglicht, solange ein in der Gaskapsel vorherrschender erster Gasdruck ausreicht, um das Druckbegrenzungsventil in einen offenen Zustand zu überführen und/oder im offenen Zustand zu halten. Es versteht sich, dass die Verwendung der Vorrichtung zum Austragen vorzugsweise ein Austragsmedium im Geräteinnenraum bedingt, andernfalls lediglich das Gas bzw. der Stickstoff ausgetragen wird.

Die Gaskapsel kann also entsprechend lange mit der Vorrichtung fluidisch verbunden und im Gaskapselhalter gehalten bleiben und soll prinzipiell nicht ausgetauscht werden, sofern noch Austragsmedium im Geräteinnenraum ist. Nachdem sämtliches Austragsmedium ausgetragen ist, wird man in der Praxis die Gaskapsel entfernen und das Behältnis öffnen, um es zu waschen oder ggf. ein neues gewünschtes Fluid/Austragsmedium einzufüllen.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Schnittdarstellung eines erfindungsgemäßen Systems mit einer erfindungsgemäßen Vorrichtung zum Austragen von gekühlten Fluiden, wobei ein Druckbegrenzungsventil offen ist
- Fig. 2: eine vergrößerte Darstellung des Details A aus Fig. 1
- Fig. 3: eine Schnittdarstellung des erfindungsgemäßen Systems mit der erfindungsgemäßen Vorrichtung analog zu Fig. 1, wobei das Druckbegrenzungsventil geschlossen ist
- Fig. 4: eine vergrößerte Darstellung des Details B aus Fig. 3
- Fig. 5: eine Explosionsdarstellung der erfindungsgemäßen Vorrichtung

### WEGE ZUR AUSFÜHRUNG DER ERFINDUNG

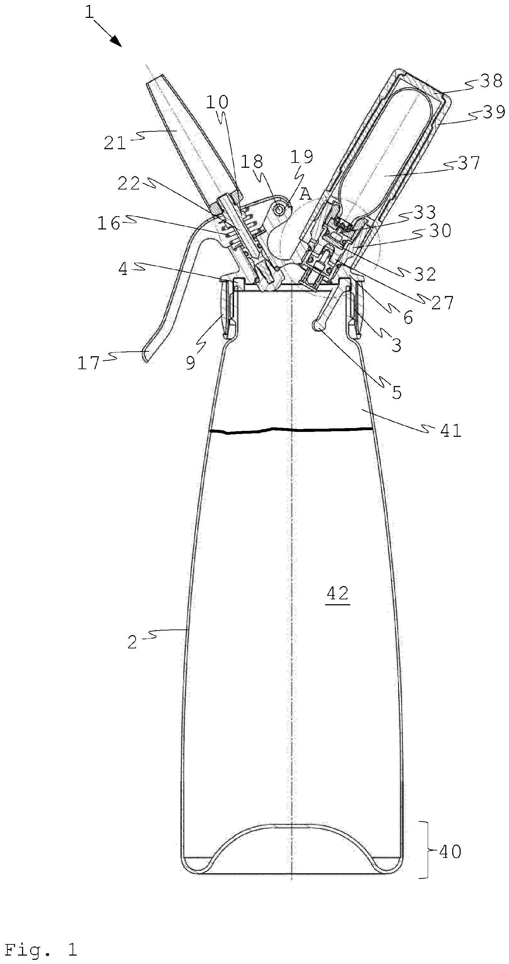

Fig. 1 zeigt eine Schnittdarstellung des erfindungsgemäßen Systems mit der erfindungsgemäßen Vorrichtung 1 zum Austragen von gekühlten Fluiden, vorzugsweise von "Nitro Coffee". Die Vorrichtung 1 umfasst ein zu öffnendes und zu verschließendes Behältnis mit einem Geräteinnenraum 41 zur Aufnahme eines Austragsmediums 42, z.B. gekühlten Kaffees, wobei das Behältnis durch eine Flasche 2 und einen daran anordenbaren Kopf 6 ausgebildet ist.

Weiters umfasst die Vorrichtung 1: einen Gaskapselhalter 38 zur Aufnahme einer auswechselbaren, mit Gas gefüllten Gaskapsel 37; eine Aufstecheinheit 33, um eine fluidische Verbindung zwischen der Gaskapsel 37 und der Vorrichtung 1 zu gewährleisten; eine Austragungsöffnung 22, durch welche das Austragsmedium 42 bei Betätigung der Vorrichtung 1 mittels eines Betätigungselements 17 aus dem Geräteinnenraum 41 austragbar ist. Dabei wird die Vorrichtung 1 auf den Kopf gestellt, d.h. mit Austragungsöffnung 22 nach unten bzw. in Richtung der Schwerkraft weisend.

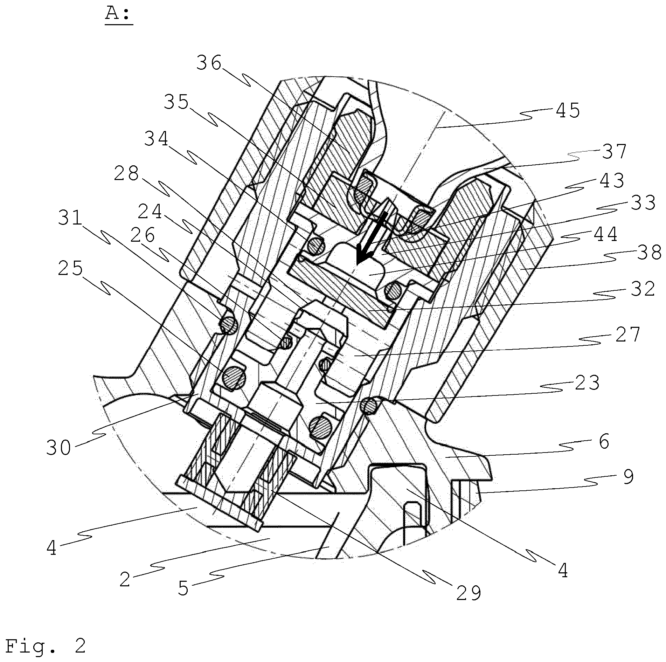

Dabei ist in einer Gasströmungsrichtung 43 gesehen nach der Aufstecheinheit 33 ein Druckbegrenzungsventil angeordnet, dessen Aufbau in der vergrößerten Darstellung des Details A in Fig. 2 gut erkennbar ist. Dieses Druckbegrenzungsventil ist in Fig. 1 und Fig. 2 im offenen Zustand dargestellt, d.h. dass das Gas aus der Gaskapsel 37 entlang eines Strömungspfads in den Geräteinnenraum 41 strömen kann bzw. strömt.

Es ist vorgesehen, dass in der Gasströmungsrichtung 43 gesehen vor dem Druckbegrenzungsventil ein Spänesammelraum 44 angeordnet ist, der zur Aufnahme bzw. zum Sammeln von Spänen oder Verunreinigungen dient, die beim Aufstechen der Gaskapsel 37 entstehen oder von der Gaskapsel 37 bzw. von deren Oberfläche stammen und über die Aufstecheinheit 33 durch das aus der Gaskapsel strömende Gas in die Vorrichtung 1 transportiert werden. Hierzu weist der Spänesammelraum 44 ein Volumen von mindestens 20 mm³, vorzugsweise von 30 mm³ bis 90 mm³, auf. Indem die Späne/Verunreinigungen im Spänesammelraum 44 gesammelt werden, gelangen sie nicht bis ins Druckbegrenzungsventil oder gar bis in den Geräteinnenraum 41.

Zur platzsparenden Unterbringung ist der Spänesammelraum 44 abschnittsweise von der Aufstecheinheit 33 begrenzt, wobei der Spänesammelraum 44 rotationssymmetrisch um eine Längsachse 45 der Aufstecheinheit 33 ausgebildet.

Um zu verhindern, dass die Späne/Verunreinigungen aus dem Spänesammelraum 44 in Gasströmungsrichtung 43, insbesondere in das Druckbegrenzungsventil oder gar den Geräteinnenraum 41, weiter transportiert werden, ist in der Gasströmungsrichtung 43 gesehen nach dem Spänesammelraum 44 und vor dem Druckbegrenzungsventil ein Filterelement 32 angeordnet.

Im gezeigten Ausführungsbeispiel weist das Filterelement 32 eine mittlere Porengröße von ca. 30 µm auf und ist in Gasströmungsrichtung 43 gemessen ca. 2 mm dick, um hohe Gasvolumenströme bei gleichzeitig hinreichender, zuverlässiger Filterleistung zu gewährleisten.

Weiters ist das Filterelement 32 im gezeigten Ausführungsbeispiel aus Polypropylen (PP) gefertigt. Polypropylen (PP) hält hohen thermischen Belastungen, insbesondere bis ca. 95°C, stand, wie sie beispielsweise in einer Geschirrspülmaschine, wie sie insbesondere im Gastgewerbe Verwendung findet, vorkommen können. Entsprechend kann der Kopf 6 mit dem Filterelement 32 problemlos in Geschirrspülmaschinen gereinigt werden.

Im gezeigten Ausführungsbeispiel funktioniert das Druckbegrenzungsventil nach dem Prinzip eines Differentialkolbens. Hierbei weist das Druckbegrenzungsventil einen Druckbegrenzungsventilkolben 23 mit einer außenliegenden Wirkfläche und mit einer innenliegenden Wirkfläche auf. Die außenliegende Wirkfläche ist mit einem ersten Gasdruck beaufschlagbar bzw. wird mit diesem beaufschlagt, wobei der erste Gasdruck in der Gaskapsel 37 vorherrscht, wenn die Gaskapsel 37 in fluidischer Verbindung mit der Vorrichtung 1 und damit mit dem Druckbegrenzungsventil steht. Die innenliegende Wirkfläche ist mit einem zweiten Gasdruck beaufschlagbar bzw. wird mit diesem beaufschlagt, wobei der zweite Gasdruck im Geräteinnenraum 41 vorherrscht, wenn das Druckbegrenzungsventil mit dem Geräteinnenraum 41 in fluidischer Verbindung steht. Der zweite Gasdruck kann auch als Geräteinnendruck bezeichnet werden. Das Druckbegrenzungsventil ist dabei so ausgelegt, dass das Druckbegrenzungsventil einen offenen Zustand aufweist, solange ein erstes Produkt aus dem ersten Gasdruck und der außenliegenden Wirkfläche größer gleich einem zweiten Produkt aus dem zweiten Gasdruck und der innenliegenden Wirkfläche ist. Sobald das erste Produkt kleiner als das zweite Produkt wird, schließt das Druckbegrenzungsventil, indem sich der Druckbegrenzungsventilkolben 23 entgegen der Gasströmungsrichtung 43 in Richtung der Gaskapsel 37 verschiebt. Das Druckbegrenzungsventil weist dann den geschlossenen Zustand solange auf, solange das erste Produkt kleiner gleich dem zweiten Produkt ist.

Aufgrund von in der Praxis unvermeidbarer Reibung findet keine Zustandsänderung des Druckbegrenzungsventils statt, wenn das erste Produkt mathematisch exakt gleich dem zweiten Produkt ist. Geringfügige Abweichungen von dieser Gleichheit können jedoch zur Zustandsänderung führen.

Bei der gezeigten Ausführungsform weist der Kopf 6 ein Innengewinde vom Typ TR54x3 auf, um mit einem an der Flasche 2 im Bereich einer Flaschenöffnung angeordneten Außengewinde 3 vom Typ TR54x3 verschraubt zu werden und so das Behältnis auszubilden, vgl. Fig. 1. Dabei ist bei bestimmungsgemäßer Verwendung zwischen Kopf 6 und Flasche 2 eine Kopfdichtung 4 mit einer Entnahmelasche 5 angeordnet.

Die genannten Gewindetypen bzw. Gewindegrößen weichen bewusst von sonst im Bereich ähnlicher Vorrichtungen üblichen Standard ab, um ein etwaiges Vertauschen der für die hohen Drücke ausgelegten Flasche 2, deren Geräteinnenraum 41 üblicherweise ein Fassungsvermögen für bis zu 1 Liter des gewünschten Austragsmediums 42 aufweist, mit anderen im Küchenbereich verwendeten Flaschen, welche keine derartigen Drücke aufnehmen können, zu vermeiden. Analoges gilt für den Kopf 6, da ebenso andere im Küchenbereich verwendeten Köpfe mit diesem Kopf 6 nicht vertauscht werden dürfen. Dadurch soll vermieden werden, dass es zu einem etwaigen Bersten der Vorrichtung 1 bei der Zubereitung eines "Nitro Coffee" kommt und im schlimmsten Fall der Benutzer Verletzungen davonträgt.

Typischerweise verlangt die Zubereitung eines "Nitro Coffee" einen zweiten Gasdruck im Geräteinnenraum 41 von 1,5 bar bis 5 bar. Bei falschem Gebrauch kann der zweite Druck aber auch deutlich höher werden, insbesondere dann, wenn der Benutzer zuviel - beispielsweise über eine Begrenzungslinie im Geräteinnenraum 41 hinaus - Austragsmedium 42 in das Behältnis bzw. in den Geräteinnenraum 41 füllt. Um auch für solche Fälle die mechanische Integrität der Vorrichtung 1 bzw. des Behältnisses und damit die Sicherheit des Benutzers zu gewährleisten, weist die in den Figuren gezeigte Ausführungsform folgende optimale Kombination von einzelnen Sicherheitsmerkmalen auf: die Flasche 2 ist aus Metall und hat eine Wandstärke im Bereich von 0,5 mm bis 3 mm, vorzugsweise 1 mm bis 1,5 mm; die Flasche 2 hat einen den Geräteinnenraum 41 abschnittsweise begrenzenden Flaschenboden 40, welcher Flaschenboden 40 champagnerflaschenartig nach innen gewölbt ist. Dieser Flaschenboden 40 beult sich bei einem zu hohen zweiten Druck in der Flasche 2 aus und verhindert so ein schlagartiges Bersten der Flasche 2, wodurch bei nicht sachgemäßer Verwendung schwerwiegende Verletzungen beim Benutzer vermieden werden können.

Des Weiteren umfasst der Kopf 6 zur Gewährleistung einer höheren Sicherheit beim Greifen bzw. Handhaben der Vorrichtung 1 mantelseitig im Verbindungsbereich mit der Flasche 2 eine vorzugsweise auf Silikon oder Kunststoff basierende Kopfabdeckung 9.

Der Gaskapselhalter 38 ist im gezeigten Ausführungsbeispiel von einer, vorzugsweise auf Silikon oder Kunststoff basierenden, Gaskapselhalterabdeckung 39 mantelflächig umgeben. Die auswechselbare Gaskapsel 37 ist bei bestimmungsgemäßer Verwendung der Vorrichtung 1 im Gaskapselhalter 38 angeordnet. Beim Anordnen, vorzugsweise Verschrauben, des Gaskapselhalters 38 an einem Trägerelement 30 wird eine, vorzugsweise in Form einer Kappe ausgebildete, Verschlussfläche der Gaskapsel 37 mittels der Aufstecheinheit 33 aufgestochen. Beim Aufstechen erfolgt jedenfalls eine Relativbewegung zwischen der mittels der Verschlussfläche verschlossenen Gaskapsel 37 und der Aufstecheinheit 33, wobei die Gaskapsel 37 insbesondere beim Festschrauben in Richtung der Aufstecheinheit 33 derart relativ bewegt wird, dass die Verschlussfläche aufgestochen wird. Nach dem Aufstechen kann Gas aus der Gaskapsel 37 entweichen und in den Geräteinnenraum 41 strömen, wo sich das Gas mit dem Austragsmedium 42 vermischen kann, wobei durch Schütteln der Vorrichtung 1 eine Vermischung des Gases mit dem Austragsmedium 42 begünstigt werden kann. D.h. auf diese Weise wird eine fluidische Verbindung zwischen der Gaskapsel 37 und der Vorrichtung 1 hergestellt.

Das am Kopf 6 angeordnete Trägerelement 30 weist zur Vermeidung etwaiger Gasleckagen ein Dichtelement 31 auf. Zusätzlich weist auch die Aufstecheinheit 33 ein eigenes Dichtelement 34 auf.

Der Gaskapselhalter 38 weist vorzugsweise ein Innengewinde mit einer Gewindegröße von M24x2,5 auf, um ein etwaiges Vertauschen mit einem für einen anderen Siphon ausgelegten Gaskapselhalter zu vermeiden. Vorzugsweise unterscheidet sich die für die Vorrichtung 1 vorgesehene Gaskapsel 37 zusätzlich durch einen etwas größeren Durchmesser sowie durch eine etwas größere Länge von etwaigen anderen handelsüblichen Gaskapseln, wie sie beispielsweise in Sahne- oder Sodageräten zum Einsatz kommen.

Es sei bemerkt, dass auch andere Verbindungsformen neben dem Festschrauben für den Fachmann denkbar sind, beispielsweise einfaches festes Aufstecken des Gaskapselhalters 38 oder ein Bajonettverschluss. Auch ist es möglich, dass die genannte Relativbewegung im Wesentlichen durch die Aufstecheinheit 33 selbst, beispielsweise mit Hilfe eines Federelements, durchgeführt wird. Andererseits ist es ebenso möglich, dass die Gaskapsel 37 und die Aufstecheinheit 33 synchron aufeinander zu bewegt werden, wodurch ebenso ein Aufstechen der Verschlussfläche durchführbar ist.

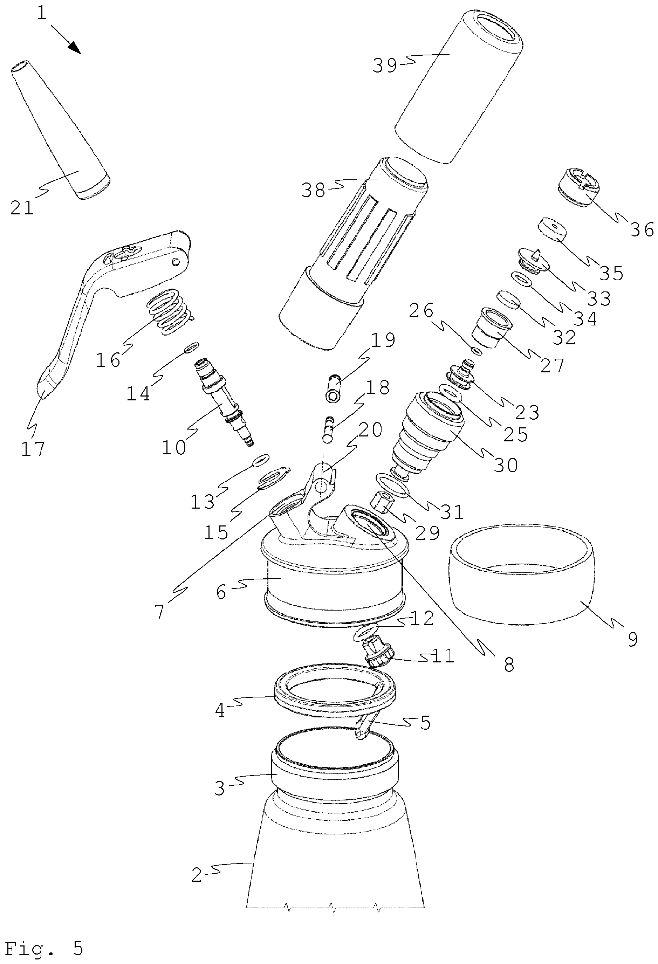

Die Austragungsöffnung 22 ist in einem Entnahmekolben 10 angeordnet. Durch die Austragungsöffnung 22 bzw. durch eine austauschbare fluidisch mit der Austragungsöffnung 22 in Verbindung stehende Austragungsdüse 21 wird das mit Gas versetzte bzw. beaufschlagte Austragsmedium 42 bei Betätigung der Vorrichtung 1 mittels des hebelartigen, mit einem Federelement 16 vorgespannten Betätigungselements 17 aus dem Geräteinnenraum 41 ausgetragen. Um dies zu gewährleisten, ist das Betätigungselement 17 mittels eines in einer Stiftführung 19 geführten Achsenstifts 18 mit dem Kopf 6 verbunden, wobei das Betätigungselement 17 um eine Stiftachse 20 schwenkbar ist. Bei einer Betätigung des Betätigungselements 17 wird dieses verschwenkt, wird das Federelement 16 zusammengedrückt und wird die Austragungsöffnung 22 geöffnet. Im Detail wird der Entnahmekolben 10 durch die Betätigung des Betätigungselements 17 in den Kopf 6 der Vorrichtung 1 derart gedrückt, dass ein erstes Dichtelement 12 des Entnahmekolbens 10 (siehe Fig. 5) geöffnet wird und eine fluidische Verbindung vom Geräteinnenraum 41 zur Austragungsdüse 21 gewährleistet ist.

Auch wäre es möglich, dass statt dem Federelement 16 ein unter Druck zusammendrückbarer, sich im unbelasteten Zustand wieder ausdehnender Puffer in Form eines Gummi- bzw. Kautschukelements eingesetzt wird. Dieser Puffer dient in gleicher Weise wie das Federelement 16 zum Schließen des Entnahmekolbens 10.

Das Betätigungselement 17 kann in einer alternativen Ausführungsform auch tasterartig in Form eines Druckknopfs ausgebildet sein.

In Fig. 2 ist erkennbar, dass das Druckbegrenzungsventil der gezeigten Ausführungsform der Vorrichtung 1 den Druckbegrenzungsventilkolben 23, eine Zentrierung 27, ein Rückschlagventil 29 sowie ein erstes Dichtelement 25 und ein zweites Dichtelement 26 des Druckbegrenzungsventilkolbens 23 umfasst. Wie gesagt, dient der in der Zentrierung 27 angeordnete Druckbegrenzungsventilkolben 23 zur Begrenzung des Drucks im Geräteinnenraum 41, wobei dieser Druck im Wesentlichen durch das aus der Gaskapsel 37 in den Geräteinnenraum 41 strömende Gas erzeugt wird. Die Gaskapsel 37 bleibt dabei während der gesamten Anwendung an der Vorrichtung 1 bis zum Erreichen eines annähernd entleerten Zustandes angeordnet, wobei die Gaskapsel 37 in Kombination mit dem Druckbegrenzungsventil als Gasspeicher fungiert.

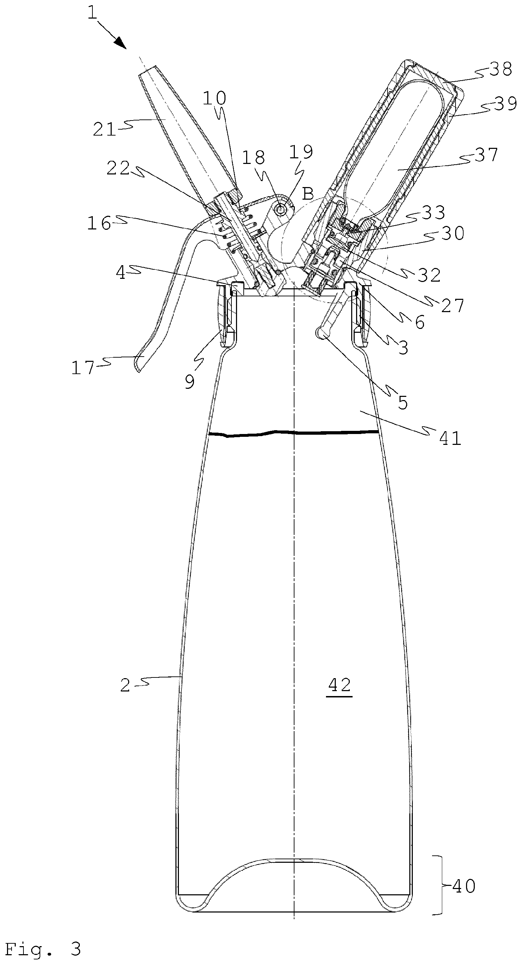

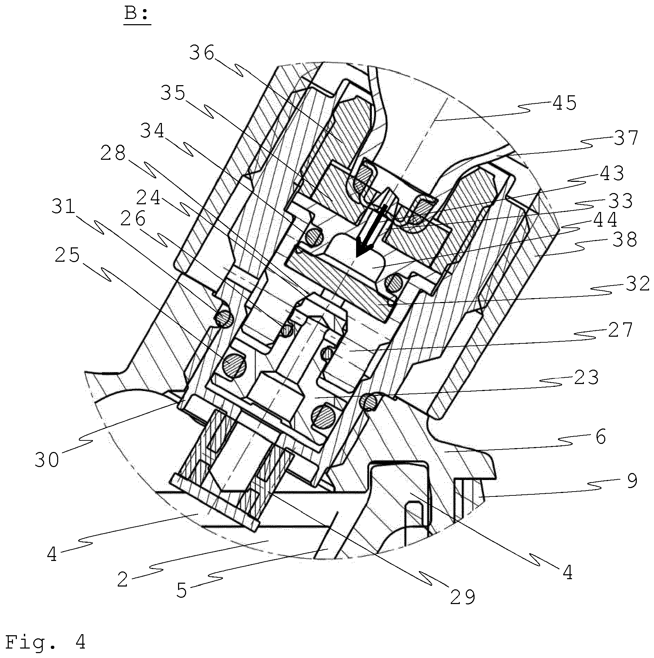

Im Gegensatz zu Fig. 3 und Fig. 4 ist in Fig. 1 und Fig. 2 das Druckbegrenzungsventil im offenen Zustand dargestellt. D.h. eine Dichtfläche 24 des Druckbegrenzungsventilkolbens 23 ist von einem Dichtkegel 28 bzw. einer Dichtkante der Zentrierung 27 beabstandet angeordnet bzw. liegt an dem Dichtkegel 28 nicht an, sodass Gas in den Geräteinnenraum 41 strömen kann.

Mit Hilfe des Rückschlagventils 29 ist die Strömung des aus der Gaskapsel 37 strömenden Gases nur in eine Richtung, nämlich in den Geräteinnenraum 41, möglich. Eine Strömung von Gas und/oder Austragsmedium 42 aus dem Geräteinnenraum 41 in das Druckbegrenzungsventil wird somit verhindert. Das Rückschlagventil 29 unterstützt auf diese Weise die Funktion der Gaskapsel 37 als Gasspeicher. Zudem wird insbesondere eine Verunreinigung des Druckbegrenzungsventils bzw. des Druckbegrenzungsventilkolbens 23 durch das Austragsmedium 42 unterbunden.

Des Weiteren ist eine Auswurfplatte 35 vorgesehen, die dazu dient ein etwaiges Festklemmen der Verschlussfläche der Gaskapsel 37 an der Aufstecheinheit 33 zu vermeiden. D.h. die Auswurfplatte 35 erleichtert die Entnahme der entleerten Gaskapsel 37 aus der Vorrichtung 1.

Schließlich ist ein Fixierelement 36 zur Fixierung der Zentrierung 27 im Trägerelement 30 angeordnet, wobei das Fixierelement 36 vorzugsweise mit dem Trägerelement 30 verschraubt ist.

Fig. 3 zeigt analog zu Fig. 1 eine Schnittdarstellung des erfindungsgemäßen Systems mit der erfindungsgemäßen Vorrichtung 1 zum Austragen von gekühlten Fluiden, vorzugsweise von "Nitro Coffee", wobei das Druckbegrenzungsventil im geschlossen Zustand dargestellt ist. D.h. im Geräteinnenraum 41 liegt ein derartiger zweiter Gasdruck vor, dass der Druckbegrenzungsventilkolben 23 gegen die Gasströmungsrichtung 43 bzw. in Richtung der Gaskapsel 37 verschoben ist. Im Detail liegt die Dichtfläche 24 bzw. eine Dichtkante der Dichtfläche 24 des Druckbegrenzungsventilkolbens 23 an dem Dichtkegel 28 der Zentrierung 27 an, sodass eine etwaige Gasströmung aus der Gaskapsel 37 in den Geräteinnenraum 41 unterbunden ist. Diese Anordnung ist in Fig. 4 besonders gut zu erkennen, wobei Fig. 4 eine vergrößerte Darstellung des Details B aus Fig. 3 zeigt.

Fig. 5 zeigt eine Explosionsdarstellung der erfindungsgemäßen Vorrichtung 1, wobei gemäß obigen Erläuterungen der Kopf 6 mit seinem Innengewinde auf das Außengewinde 3 der Flasche 2 mit einer dazwischen angeordneten Kopfdichtung 4 mit Entnahmelasche 5 nach dem Einbringen des Austragsmediums 42 in die Flasche 2 aufgeschraubt wird. Es sind für den Fachmann auch andere Verbindungsformen des Kopfes 6 mit der Flasche 2 denkbar, beispielsweise eine Verbindung in Form eines Bajonettverschlusses.

Der Entnahmekolben 10 ist mittels eines Unterteils 11 an dem Kopf 6 angeordnet bzw. greift in diesen Unterteil 11 über eine Entnahmeöffnung 7 des Kopfes 6 ein, wobei zum Schutz vor einem unbeabsichtigten Ausströmen bzw. Entweichen des Austragsmediums 42 aus dieser Entnahmeöffnung 7 das erste Dichtelement 12 am Unterteil 11 angeordnet ist. Darüber hinaus weist der Entnahmekolben 10 eine Verdrehsicherung 15 zum Schutz vor einem etwaigen Verdrehen bzw. Verklemmen des Entnahmekolbens 10 in der Entnahmeöffnung 7 auf. Zusätzlich weist der Entnahmekolben 10 zur sicheren Abdichtung in Richtung des Kopfs 6 ein zweites Dichtelement 13 und zur sicheren Abdichtung in Richtung der Austragungsdüse 21 ein drittes Dichtelement 14 auf.

Der Gaskapselhalter 38 ist über das Trägerelement 30 an dem Kopf 6 angeordnet, wobei das Trägerelement 30 über eine Gaseinlassöffnung 8 des Kopfes 6 in diesen eingreift. Dabei ist zum Schutz vor einem etwaigen Ausströmen bzw. Entweichen des Gases aus der Gaskapsel 37 als auch des Austragsmediums 42 aus dieser Gaseinlassöffnung 8 das Dichtelement 31 vorgesehen. Hierbei ist an dem in die Gaseinlassöffnung 8 eingreifenden bzw. in diesem angeordneten Teil des Trägerelements 30 das Rückschlagventil 29 angeordnet um zu gewährleisten, dass die Strömung des aus der Gaskapsel 37 strömenden Gases nur in eine Richtung, nämlich nur in Gasströmungsrichtung 43, möglich ist.

Im Trägerelement 30 ist die Zentrierung 27 des Druckbegrenzungsventils angeordnet. Die Zentrierung 27 ist rohrförmig mit unterschiedlichen Durchmessern ausgebildet, wobei zur Gaseinlassöffnung 8 des Kopfes 6 gerichtet ein kleinerer Durchmesser zur Aufnahme des Druckbegrenzungsventilkolbens 23 dient, während die gegenüberliegende Seite der Zentrierung 27 einen größeren Durchmesser zur Aufnahme der Aufstecheinheit 33 aufweist. Im Detail weist die Zentrierung 27 auch den Dichtkegel 28 auf, an dem im geschlossenen Zustand des Druckbegrenzungsventils die Dichtfläche 24 bzw. die Dichtkante der Dichtfläche 24 des Druckbegrenzungsventilkolbens 23 anliegt. Die Dichtkante der Dichtfläche 24 berandet die Dichtfläche 24 zumindest abschnittsweise. Eine Durchgangsöffnung ist zwischen den beiden Seiten der Zentrierung 27 angeordnet und ermöglicht das Durchströmen der Zentrierung 27 für das Gas aus der Gaskapsel 37.

Alternativ sind Ausführungsformen denkbar, bei denen die Dichtfläche 24 geometrisch entsprechend dem Dichtkegel 28 der Zentrierung 27 ausgebildet sein kann und/oder auch zusätzliche Dichtelemente verwendet werden können, um eine erforderliche Dichtheit im geschlossenen Zustand des Druckbegrenzungsventils zu gewährleisten.

Um eine etwaige Gasleckage zu vermeiden, liegt das erste Dichtelement 25 des Druckbegrenzungsventilkolbens 23 an einer inneren Mantelfläche des Trägerelements 30 an und das zweite Dichtelement 26 des Druckbegrenzungsventilkolbens 23 an einer inneren Mantelfläche der Zentrierung 27.

An der dem Druckbegrenzungsventilkolben 23 gegenüberliegenden Seite der Zentrierung 27 ist die Aufstecheinheit 33 angeordnet, wobei diese über obig beschriebene Durchgangsöffnung mit dem Druckbegrenzungsventilkolben 23 in fluidischer Verbindung steht. Das zwischen dem Druckbegrenzungsventilkolben 23 und der Aufstecheinheit 33 angeordnete Filterelement 32 trägt zusätzlich zur Vermeidung einer etwaigen Zerstörung der Oberfläche des Druckbegrenzungsventilkolbens 23 durch etwaige Spanbildung bei. Schließlich ist das Fixierelement 36 zur Fixierung der Zentrierung 27 im Trägerelement 30 angeordnet, wobei das Fixierelement 36 vorzugsweise mit dem Trägerelement 30 verschraubt ist.

In der in den Fig. 1 bis 5 dargestellten Ausführungsform ist das Filterelement 32 scheibenförmig ausgebildet, wobei auch diverse andere an den jeweiligen fluidischen Strömungspfad bzw. das Druckbegrenzungsventil angepasste geometrische Formen des Filterelements 32 einsetzbar sind.

Hierbei umfasst das Filterelement 32 vorzugsweise ein Verhältnis von Dicke zu Durchmesser im Bereich von 1/3 bis 1/7, vorzugsweise ca. 1/5.

Das erfindungsgemäße System umfasst die erfindungsgemäße Vorrichtung 1 und die Gaskapsel 37. Der Aufbau der erfindungsgemäßen Vorrichtung 1 zum Austragen von Fluiden, vorzugsweise von "Nitro Coffee", bewirkt somit ein Aufstechen der Verschlussfläche der Gaskapsel 37 beim Aufschrauben des mit einer Gaskapsel 37 versehenen Gaskapselhalters 38 auf den Kopf 6, wodurch Gas, vorzugsweise Stickstoff (N2), aus der Gaskapsel 37 durch das Filterelement 32 und das Druckbegrenzungsventil zu dem aufzubereitenden Austragsmedium 42 gelangt. Durch das Halten der Gaskapsel 37 im Gaskapselhalter 38 und die Gewährleistung der fluidischen Verbindung zwischen der Gaskapsel 37 und der Vorrichtung, wird ein Arbeitszustand des Systems eingestellt. Wie bereits erwähnt, bildet die Gaskapsel 37 dabei einen Gasspeicher aus, der eine Verwendung der Vorrichtung 1 zum Austragen ermöglicht, solange der in der Gaskapsel 37 vorherrschende erste Gasdruck ausreicht, um das Druckbegrenzungsventil in den offenen Zustand zu überführen und/oder im offenen Zustand zu halten.

Hierbei enthält die Gaskapsel 37 in einer bevorzugten Ausführungsform im gefüllten Zustand 1,4 bis 2,6 g des Stickstoffs (N2), wobei die Gaskapsel 37 im verschlossenen Zustand üblicherweise einen Innendruck von 85 bis 155 bar bei Raumtemperatur aufweist.

Die bestimmungsgemäße Verwendung der erfindungsgemäßen Vorrichtung 1 zum Austragen von Fluiden, vorzugsweise "Nitro Coffee", bzw. des erfindungsgemäßen Systems umfasst im Wesentlichen die nachfolgenden Schritte:
1. Einbringen des aufzubereitenden Fluides bzw. Austragsmediums 42, vorzugsweise in Form eines kalten Kaffees, in die Flasche 2 bzw. in den Geräteinnenraum 41;
2. Einlegen der Kopfdichtung 4 in den Kopf 6, wobei die Entnahmelasche 5 nach oben vom Kopf 6 weggerichtet ist;
3. Aufschrauben des Kopfs 6 auf die Flasche 2;
4. Einsetzen der Gaskapsel 37 in den Gaskapselhalter 38;
5. Festschrauben des Gaskapselhalters 38 auf dem Kopf 6 bzw. auf dem am Kopf 6 angeordneten Trägerelement 30, wodurch die Verschlussfläche (Kappe) der Gaskapsel 37 durch die Aufstecheinheit 33 aufgestochen wird und Gas, insbesondere Stickstoff, aus der Gaskapsel 37 durch den Spänesammelraum 44 und das Filterelement 32 sowie das Druckbegrenzungsventil in den Geräteinnenraum 41 zu dem aufzubereitenden Austragsmedium 42 gelangt;
6. Der Druckbegrenzungsventilkolben 23 des Druckbegrenzungsventils lässt solange Gas in den Geräteinnenraum 41 strömen, solange das erste Produkt aus dem ersten Gasdruck und der außenliegenden Wirkfläche größer gleich dem zweiten Produkt aus dem zweiten Gasdruck und der innenliegenden Wirkfläche ist. Sobald das erste Produkt kleiner als das zweite Produkt wird, bewegt sich der Druckbegrenzungsventilkolben 23 gegen die Gasströmungsrichtung 43, bis die Dichtfläche 24 bzw. die Dichtkante der Dichtfläche 24 am Dichtkegel 28 der Zentrierung 27 dicht anliegt und das Druckbegrenzungsventil somit geschlossen ist und kein Gasfluss durch das Druckbegrenzungsventil mehr möglich ist.
7. Schütteln der Vorrichtung 1, vorzugsweise 5- bis 10-mal, um eine beschleunigte Vermischung des Gases, vorzugsweise Stickstoff (N2), mit dem Austragsmedium 42, vorzugsweise dem kalten Kaffee, zu erzielen.
8. Im Anschluss kann das mit dem Gas beaufschlagte Austragsmedium 42 durch Betätigung der Vorrichtung 1 im auf den Kopf gestellten Zustand mittels des Betätigungselements 17 in Form eines Hebels in ein Behältnis gefüllt werden, wobei sich vorzugsweise ein perlen- bzw. wellenartiger Kaskadeneffekt beim Austragsmedium 42, insbesondere "Nitro Coffee", einstellt und sich eine feste Schaumkrone bzw. Haube bildet.
9. Durch das Austragen werden das Austragsmedium 42 sowie das Gas in der Flasche 2 bzw. im Geräteinnenraum 41 weniger und der Geräteinnendruck sinkt. Wenn der Geräteinnendruck soweit gesunken ist, dass das erste Produkt größer als das zweite Produkt wird, öffnet das Druckbegrenzungsventil wieder indem sich der Druckbegrenzungsventilkolben 23 in Gasströmungsrichtung 43 weg von der Gaskapsel 37 bewegt bzw. verschiebt, woraufhin wieder Gas aus der als Gasspeicher fungierenden Gaskapsel 37 in den Geräteinnenraum 41 strömt. Der Geräteinnendruck steigt entsprechend wieder. Sobald das erste Produkt kleiner als das zweite Produkt wird, bewegt sich der Druckbegrenzungsventilkolben 23 wieder gegen die Gasströmungsrichtung 43 in Richtung der Gaskapsel 37 und schließt das Druckbegrenzungsventil - und so weiter und so fort.
10. Enthält die Vorrichtung 1 kein auszutragendes Fluid mehr oder ist die Gaskapsel 37 leer, so wird die Vorrichtung 1 im aufrechten Zustand durch Benutzung des Betätigungselements 17 druckentlastet und wird der Gaskapselhalter 38 abgeschraubt, wobei das Betätigungselement 17 zur sicheren Druckentlastung vor dem Abschrauben des Kops 6 noch einmal betätigt wird.

### BEZUGSZEICHENLISTE

- 1: Vorrichtung
- 2: Flasche
- 3: Außengewinde der Flasche 2
- 4: Kopfdichtung
- 5: Entnahmelasche der Kopfdichtung 4
- 6: Kopf
- 7: Entnahmeöffnung des Kopfes 6
- 8: Gaseinlassöffnung des Kopfes 6
- 9: Kopfabdeckung
- 10: Entnahmekolben
- 11: Unterteil des Entnahmekolbens 10
- 12: erstes Dichtelement des Entnahmekolbens 10
- 13: zweites Dichtelement des Entnahmekolbens 10
- 14: drittes Dichtelement des Entnahmekolbens 10
- 15: Verdrehsicherung des Entnahmekolbens 10
- 16: Federelement
- 17: Betätigungselement
- 18: Achsenstift
- 19: Stiftführung
- 20: Stiftachse
- 21: Austragungsdüse
- 22: Austragungsöffnung
- 23: Druckbegrenzungsventilkolben
- 24: Dichtfläche des Druckbegrenzungsventilkolbens 23
- 25: erstes Dichtelement des Druckbegrenzungsventilkolbens 23
- 26: zweites Dichtelement des Druckbegrenzungsventilkolbens 23
- 27: Zentrierung des Druckbegrenzungsventils
- 28: Dichtkegel der Zentrierung 27
- 29: Rückschlagventil
- 30: Trägerelement
- 31: Dichtelement des Trägerelements 30
- 32: Filterelement
- 33: Aufstecheinheit
- 34: Dichtelement zur Aufstecheinheit 33
- 35: Auswurfplatte
- 36: Fixierelement
- 37: Gaskapsel
- 38: Gaskapselhalter
- 39: Gaskapselhalterabdeckung
- 40: Flaschenboden
- 41: Geräteinnenraum
- 42: Austragsmedium
- 43: Gasströmungsrichtung
- 44: Spänesammelraum
- 45: Längsachse der Aufstecheinheit 33

## Patentansprüche

1. Vorrichtung (1) zum Austragen von, vorzugsweise gekühlten, Fluiden, die Vorrichtung (1) umfassend:
ein zu öffnendes und zu verschließendes Behältnis (2, 6), welches einen Geräteinnenraum (41) zur Aufnahme eines Austragsmediums (42) ausbildet;
einen Gaskapselhalter (38) zur Aufnahme einer auswechselbaren, mit Gas gefüllten Gaskapsel (37);
eine Aufstecheinheit (33), um eine fluidische Verbindung zwischen der Gaskapsel (37) und der Vorrichtung (1) zu gewährleisten;
eine Austragungsöffnung (22), durch welche das Austragsmedium (42) bei Betätigung der Vorrichtung (1) aus dem Geräteinnenraum (41) austragbar ist;
wobei in einer Gasströmungsrichtung (43) gesehen nach der Aufstecheinheit (33) ein Druckbegrenzungsventil angeordnet ist und dass in der Gasströmungsrichtung (43) gesehen vor dem Druckbegrenzungsventil ein Spänesammelraum (44) angeordnet ist;
wobei in der Gasströmungsrichtung (43) gesehen nach dem Spänesammelraum (44) und vor dem Druckbegrenzungsventil ein Filterelement (32) angeordnet ist, wobei das Filterelement (32) vorzugsweise den Spänesammelraum (44) zumindest abschnittsweise begrenzt;
**dadurch gekennzeichnet, dass** das Filterelement (32) eine mittlere Porengröße von 25 µm bis 35 µm aufweist und aus Polypropylen (PP) gefertigt ist.

2. Vorrichtung (1) nach Anspruch 1, **dadurch gekennzeichnet, dass** der Spänesammelraum (44) zumindest abschnittsweise durch die Aufstecheinheit (33) begrenzt ist.

3. Vorrichtung (1) nach einem der Ansprüche 1 bis 2, **dadurch gekennzeichnet, dass** der Spänesammelraum (44) rotationssymmetrisch ausgebildet ist.

4. Vorrichtung (1) nach einem der Ansprüche 1 bis 3, **dadurch gekennzeichnet, dass** der Spänesammelraum (44) ein Volumen von mindestens 20 mm³, vorzugsweise von 30 mm³ bis 90 mm³, aufweist.

5. Vorrichtung (1) nach einem der Ansprüche 1 bis 4, **dadurch gekennzeichnet, dass** das Druckbegrenzungsventil einen Druckbegrenzungsventilkolben (23) mit einer außenliegenden Wirkfläche und mit einer innenliegenden Wirkfläche aufweist, wobei die außenliegende Wirkfläche mit einem ersten Gasdruck beaufschlagbar ist, der in der Gaskapsel (37) vorherrscht, wenn die Gaskapsel (37) in fluidischer Verbindung mit dem Druckbegrenzungsventil steht, und wobei die innenliegende Wirkfläche mit einem zweiten Gasdruck beaufschlagbar ist, der im Geräteinnenraum (41) vorherrscht, wenn das Druckbegrenzungsventil mit dem Geräteinnenraum (41) in fluidischer Verbindung steht, und dass das Druckbegrenzungsventil derart ausgelegt ist, dass das Druckbegrenzungsventil einen offenen Zustand aufweist, solange ein erstes Produkt aus dem ersten Gasdruck und der außenliegenden Wirkfläche größer gleich einem zweiten Produkt aus dem zweiten Gasdruck und der innenliegenden Wirkfläche ist, und einen geschlossenen Zustand, solange das erste Produkt kleiner gleich dem zweiten Produkt ist.

6. Vorrichtung (1) nach Anspruch 5, **dadurch gekennzeichnet, dass** der Druckbegrenzungsventilkolben (23) linear beweglich innerhalb eines Zentrierabschnitts (27) des Druckbegrenzungsventils angeordnet ist, wobei der Druckbegrenzungsventilkolben (23) im offenen Zustand des Druckbegrenzungsventils von einem durch den Zentrierabschnitt (27) ausgebildeten Dichtkegel (28) beabstandet angeordnet ist und wobei der Druckbegrenzungsventilkolben (23) im geschlossenen Zustand des Druckbegrenzungsventils dicht am Dichtkegel (28) anliegt.

7. Vorrichtung (1) nach einem der Ansprüche 1 bis 6, **dadurch gekennzeichnet, dass** das Druckbegrenzungsventil ein Rückschlagventil (29) umfasst.

8. Vorrichtung (1) nach einem der Ansprüche 1 bis 7, **dadurch gekennzeichnet, dass** das Behältnis (2) flaschenartig und aus Metall ausgebildet ist,
dass das Behältnis (2) eine Wandstärke von 0,5 mm bis 3 mm, vorzugsweise von 1 mm bis 1,5 mm, aufweist und dass das Behältnis (2) einen den Geräteinnenraum (41) abschnittsweise begrenzenden Boden (40) aufweist, welcher Boden (40) champagnerflaschenartig nach innen gewölbt ist.

9. System umfassend eine Vorrichtung (1) nach einem der Ansprüche 1 bis 8 sowie die mit Gas gefüllte Gaskapsel (37), wobei das Gas vorzugsweise Stickstoff (N2) ist.

10. System nach Anspruch 9, **dadurch gekennzeichnet, dass** die Gaskapsel (37) in einem verschlossenen Zustand 1,4 g bis 2,6 g Stickstoff (N2) enthält.

11. System nach einem der Ansprüche 9 bis 10 **dadurch gekennzeichnet, dass** in einem verschlossenen Zustand der Gaskapsel (37) der Stickstoff (N2) in der Gaskapsel (37) einen Druck von 85 bar bis 155 bar aufweist.

12. System nach einem der Ansprüche 9 bis 11 **dadurch gekennzeichnet, dass** in einem Arbeitszustand des Systems die Gaskapsel im Gaskapselhalter (38) gehalten und eine fluidische Verbindung der Gaskapsel (37) mit der Vorrichtung (1) gewährleistet ist, indem die Gaskapsel (37) mittels der Aufstecheinheit (33) aufgestochen ist, wobei die Gaskapsel (37) einen Gasspeicher ausbildet, der eine Verwendung der Vorrichtung (1) zum Austragen ermöglicht, solange ein in der Gaskapsel (37) vorherrschender erster Gasdruck ausreicht, um das Druckbegrenzungsventil in einen offenen Zustand zu überführen und/oder im offenen Zustand zu halten.

## Claims

1. Device (1) for discharging fluids, preferably cooled fluids, the device (1) comprising:
a container (2, 6) which can be opened and closed and which forms a device interior (41) for holding a dischargeable medium (42);
a gas capsule holder (38) for holding a replaceable gas capsule (37) filled with gas;
a piercing unit (33) for ensuring a fluidic connection between the gas capsule (37) and the device (1);
a discharge opening (22), through which the dischargeable medium (42) can be discharged from the device interior (41) when the device (1) is operated;
wherein a pressure-limiting valve is arranged downstream of the piercing unit (33) as seen in a gas flow direction (43), and in that a chip collection space (44) is arranged upstream of the pressure-limiting valve as seen in the gas flow direction (43);
wherein a filter element (32) is arranged downstream of the chip collection space (44) and upstream of the pressure-limiting valve as seen in the gas flow direction (43), wherein the filter element (32) preferably at least partially delimits the chip collection space (44);
**characterized in that** the filter element (32) has an average pore size of 25 µm to 35 µm and is made of polypropylene (PP).

2. Device (1) according to claim 1, **characterized in that** the chip collection space (44) is at least partially delimited by the piercing unit (33).

3. Device (1) according to any one of claims 1 to 2, **characterized in that** the chip collection space (44) is rotationally symmetrical.

4. Device (1) according to any one of claims 1 to 3, **characterized in that** the chip collection space (44) has a volume of at least 20 mm³, preferably from 30 mm³ to 90 mm³.

5. Device (1) according to any one of claims 1 to 4, **characterized in that** the pressure-limiting valve has a pressure-limiting valve piston (23) with an outer active surface and with an inner active surface, wherein the outer active surface can be acted upon by a first gas pressure, which prevails in the gas capsule (37), when the gas capsule (37) is fluidically connected to the pressure-limiting valve, and wherein the inner active surface can be acted upon by a second gas pressure, which prevails in the device interior (41), when the pressure-limiting valve is fluidically connected to the device interior (41), and **in that** the pressure-limiting valve is designed such that the pressure-limiting valve is in an open state as long as a first product of the first gas pressure and the outer active surface area is greater than or equal to a second product of the second gas pressure and the inner active surface area, and is in a closed state as long as the first product is less than or equal to the second product.

6. Device (1) according to claim 5, **characterized in that** the pressure-limiting valve piston (23) is arranged in a linearly movable manner within a centring portion (27) of the pressure-limiting valve, wherein the pressure-limiting valve piston (23) in the open state of the pressure-limiting valve is arranged at a distance from a sealing cone (28) formed by the centring portion (27), and wherein the pressure-limiting valve piston (23) in the closed state of the pressure-limiting valve abuts sealingly against the sealing cone (28).

7. Device (1) according to any one of claims 1 to 6, **characterized in that** the pressure-limiting valve comprises a check valve (29).

8. Device (1) according to any one of claims 1 to 7, **characterized in that** the container (2) is bottle-like and is made of metal,
**in that** the container (2) has a wall thickness of 0.5 mm to 3 mm, preferably 1 mm to 1.5 mm,
and **in that** the container (2) has a base (40) which partially delimits the device interior (41), which base (40) is curved inwards in the manner of a champagne bottle.

9. System comprising a device (1) according to any one of claims 1 to 8 and the gas capsule (37) filled with gas, wherein the gas is preferably nitrogen (N2).

10. System according to claim 9, **characterized in that** the gas capsule (37) in a closed state contains 1.4 g to 2.6 g nitrogen (N2).

11. System according to any one of claims 9 to 10, **characterized in that**, in a closed state of the gas capsule (37), the nitrogen (N2) in the gas capsule (37) is at a pressure of 85 bar to 155 bar.

12. System according to any one of claims 9 to 11, **characterized in that**, in an operating state of the system, the gas capsule is held in the gas capsule holder (38) and a fluidic connection of the gas capsule (37) to the device (1) is ensured by the gas capsule (37) being pierced by means of the piercing unit (33), wherein the gas capsule (37) forms a gas reservoir which enables the device (1) to be used for discharging as long as a first gas pressure prevailing in the gas capsule (37) is sufficient to move the pressure-limiting valve into an open state and/or keep it in the open state.

## Revendications

1. Dispositif (1) servant à distribuer des fluides, de préférence refroidis, le dispositif (1) comprenant :
un récipient (2, 6) qui peut être ouvert et fermé et qui forme un espace intérieur d'appareil (41) destiné à recevoir un milieu à distribuer (42) ;
un support de capsule de gaz (38) destiné à recevoir une capsule de gaz (37) échangeable et remplie de gaz ;
une unité de perçage (33) pour assurer une liaison fluidique entre la capsule de gaz (37) et le dispositif (1) ;
une ouverture de distribution (22) par laquelle le milieu à distribuer (42) peut être distribué à partir de l'espace intérieur d'appareil (41) lorsque le dispositif (1) est actionné ;
dans lequel une soupape de limitation de pression est disposée en aval de l'unité de perçage (33), vu dans un sens d'écoulement de gaz (43), et une chambre collectrice de copeaux (44) est disposée en amont de la soupape de limitation de pression, vu dans le sens d'écoulement de gaz (43) ;
dans lequel un élément filtrant (32) est disposé en aval de la chambre collectrice de copeaux (44) et en amont de la soupape de limitation de pression, vu dans le sens d'écoulement de gaz (43), dans lequel l'élément filtrant (32) délimite de préférence la chambre collectrice de copeaux (44) au moins sur certaines parties ;
**caractérisé en ce que** l'élément filtrant (32) présente une taille de pores moyenne de 25 µm à 35 µm et est fabriqué en polypropylène (PP).

2. Dispositif (1) selon la revendication 1, **caractérisé en ce que** la chambre collectrice de copeaux (44) est délimitée au moins sur certaines parties par l'unité de perçage (33).

3. Dispositif (1) selon l'une des revendications 1 à 2, **caractérisé en ce que** la chambre collectrice de copeaux (44) est conçue à symétrie de révolution.

4. Dispositif (1) selon l'une des revendications 1 à 3, **caractérisé en ce que** la chambre collectrice de copeaux (44) présente un volume d'au moins 20 mm³, de préférence de 30 mm³ à 90 mm³.

5. Dispositif (1) selon l'une des revendications 1 à 4, **caractérisé en ce que** la soupape de limitation de pression présente un piston de soupape de limitation de pression (23) avec une surface active extérieure et une surface active intérieure, dans lequel la surface active extérieure peut être soumise à une première pression de gaz qui règne dans la capsule de gaz (37) lorsque la capsule de gaz (37) est en liaison fluidique avec la soupape de limitation de pression, et la surface active intérieure peut être soumise à une deuxième pression de gaz qui règne dans l'espace intérieur d'appareil (41) lorsque la soupape de limitation de pression est en liaison fluidique avec l'espace intérieur d'appareil (41), et que la soupape de limitation de pression est conçue de telle sorte que la soupape de limitation de pression présente un état ouvert tant qu'un premier produit de la première pression de gaz et de la surface active extérieure est supérieur ou égal à un deuxième produit de la deuxième pression de gaz et de la surface active intérieure, et un état fermé tant que le premier produit est inférieur ou égal au deuxième produit.

6. Dispositif (1) selon la revendication 5, **caractérisé en ce que** le piston de soupape de limitation de pression (23) est disposé de manière à pouvoir être déplacé linéairement à l'intérieur d'une partie de centrage (27) de la soupape de limitation de pression, dans lequel le piston de soupape de limitation de pression (23) est disposé à distance d'un cône d'étanchéité (28) formé par la partie de centrage (27) à l'état ouvert de la soupape de limitation de pression et le piston de soupape de limitation de pression (23) est appliqué de manière étanche contre le cône d'étanchéité (28) à l'état fermé de la soupape de limitation de pression.

7. Dispositif (1) selon l'une des revendications 1 à 6, **caractérisé en ce que** la soupape de limitation de pression comprend un clapet anti-retour (29).

8. Dispositif (1) selon l'une des revendications 1 à 7, **caractérisé en ce que** le récipient (2) est réalisé en forme de bouteille et en métal,
**que** le récipient (2) présente une épaisseur de paroi de 0,5 mm à 3 mm, de préférence de 1 mm à 1,5 mm,
et que le récipient (2) présente un fond (40) délimitant l'espace intérieur d'appareil (41) sur certaines parties, lequel fond (40) est incurvé vers l'intérieur à la manière d'une bouteille de champagne.

9. Système comprenant un dispositif (1) selon l'une des revendications 1 à 8 et la capsule de gaz (37) remplie de gaz, le gaz étant de préférence de l'azote (N2).

10. Système selon la revendication 9, **caractérisé en ce que** la capsule de gaz (37) contient de 1,4 g à 2,6 g d'azote (N2) à l'état fermé.

11. Système selon l'une des revendications 9 à 10, **caractérisé en ce que**, à l'état fermé de la capsule de gaz (37), l'azote (N2) contenu dans la capsule de gaz (37) présente une pression de 85 bar à 155 bar.

12. Système selon l'une des revendications 9 à 11, **caractérisé en ce que**, dans un état de fonctionnement du système, la capsule de gaz est maintenue dans le support de capsule de gaz (38) et une liaison fluidique de la capsule de gaz (37) avec le dispositif (1) est assurée en perçant la capsule de gaz (37) au moyen de l'unité de perçage (33), dans lequel la capsule de gaz (37) forme un réservoir de gaz qui permet d'utiliser le dispositif (1) pour la distribution tant qu'une première pression de gaz régnant dans la capsule de gaz (37) est suffisante pour amener la soupape de limitation de pression à l'état ouvert et/ou pour la maintenir à l'état ouvert.
